# FASCICULE DE BREVET EUROPEEN

(11) **EP 0 458 680 B1**
(45) Date de publication et mention de la délivrance du brevet: **30.03.1994**
(21) Numéro de dépôt: 91401261.2
(22) Date de dépôt: 15.05.1991
(51) Int. Cl.: B23P 19/00

(54) **Dispositif de positionnement simultané de plusieurs éléments de liaison filetés**
Vorrichtung zum gleichzeitigen Positionieren von mehreren Schraubverbindungselementen
Device for simultaneously positioning several elements for threaded connections

(30) Priorité: 23.05.1990 FR 9006465
(43) Date de publication de la demande: 27.11.1991
(73) Titulaire: FRAMATOME, 92400 Courbevoie (FR)
(72) Inventeur: Sevelinge, Gérard, F-71100 Chalon/Saone (FR)
(74) Mandataire: Lanceplaine, Jean-Claude

(56) Documents cités:
- EP-A- 0 220 983
- PATENT ABSTRACTS OF JAPAN vol. 9, no. 111 (M-379)(1834) 15 mai 1985,& JP-A-59 232737 (HITACHI DENSHI) 27 décembre 84,
- PATENT ABSTRACTS OF JAPAN vol. 9, no. 55 (M-362)(1778) 09 mars 1985,& JP-A-59 189082 (MAZDA) 26 Octobre 1984

## Description

La présente invention concerne un dispositif de positionnement simultané de plusieurs éléments de liaison filetés pour la fixation d'une pièce sur un appareil.

Dans de nombreuses applications industrielles, on utilise pour fixer de manière amovible une pièce sur un appareil, plusieurs éléments de liaison filetés constitués par exemple par des goujons.

C'est notamment le cas pour des enceintes sous pression utilisées dans l'industrie, notamment nucléaire, par exemple les cuves de réacteurs nucléaires, chimique ou pétrochimique où un couvercle est fixé de manière amovible sur une cuve afin de pouvoir intervenir périodiquement dans ladite cuve.

A cet effet, le couvercle est fixé sur la cuve par des goujons qui sont vissés dans des taraudages prévus en partie haute de ladite cuve et qui pénètrent dans des alésages débouchants prévus dans la bride du couvercle et correspondant auxdits taraudages.

Ces goujons sont généralement employés en assez grand nombre et relativement rapprochés les uns des autres, si bien que le démontage et le remontage du couvercle nécessitent le positionnement, le dévissage et le vissage de tous ces goujons en plus de leur mise en tension.

Pour placer simultanément l'ensemble des goujons dans les alésages débouchants du couvercle et dans les taraudages de la cuve, lesdits goujons sont disposés sur un organe support qui, dans le cas d'une cuve de réacteurs nucléaires, est constitué par exemple par un anneau rigide sur lequel lesdits goujons sont uniformément répartis en symétrie polaire.

Jusqu'à présent, le centrage des goujons par rapport aux alésages débouchants du couvercle et par rapport aux taraudages de la cuve est réalisé en déplaçant verticalement l'organe support qui est positionné axialement par rapport à l'axe du couvercle et qui est guidé par un ensemble de rails disposés extérieurement sur la partie haute dudit couvercle, lui même étant monté sur la cuve.

Or, on sait que la réalisation du couvercle et de la cuve tient compte de tolérances de fabrication et que l'assemblage de ces éléments entre eux nécessite l'existence de jeux fonctionnels.

De plus, les taraudages situés sur la cuve ont une position diamétrale par rapport à l'axe principal de ladite cuve.

Par conséquent, compte tenu de l'absence d'une référence unique, le couvercle occupe une position particulière et indépendante par rapport à la cuve.

Ainsi, le positionnement idéal, c'est à dire une superposition parfaite de l'axe d'un goujon avec l'axe d'un taraudage correspondant ne peut être obtenue que par coïncidence, ce qui est loin d'être une situation satisfaisante, et qui est inacceptable pour des opérations répétitives, exécutées par exemple dans un environement confiné.

Le but de la présente invention est donc de proposer un dispositif qui permet d'aligner et de positionner les éléments de liaison filetés dans le prolongement des taraudages correspondants, les axes desdits taraudages étant retenus comme axe de référence.

Suivant l'invention, le dispositif de positionnement simultané de plusieurs éléments de liaison filetés portés par un organe support et destiné à la fixation d'une pièce placée sur un appareil, ladite pièce comportant des alésages débouchants pour passage des éléments de liaison filetés et ledit appareil comportant des taraudages correspondant auxdits alésages débouchants et susceptibles de recevoir lesdits éléments de liaison filetés est caractérisé en ce qu'il comprend :
- des moyens de contrôle permanent et de correction de la position des axes des éléments de liaison filetés par rapport aux axes des taraudages correspondants comprenant, d'une part, au moins deux générateurs laser montés sur ledit organe support et destinés à coopérer chacun avec une cellule de réception montée sur ledit appareil et, d'autre part, au moins un couple de vérins opposés, fixés sur ledit organe support dans une position horizontale et dont chaque tige est munie, à son extrémité libre, d'au moins un galet coopérant avec une rampe de guidage dudit organe support, montée sur la pièce destinée à être fixée sur ledit appareil.
- des moyens de contrôle permanent et de correction de l'horizontalité dudit organe support comprenant au moins deux inclinomètres montés sur ledit organe support,
- et des moyens de manutention dudit organe support,

Selon d'autres caractéristiques de l'invention :
- chaque générateur laser est monté sur ledit organe support par l'intermédiaire d'une platine de réglage permettant de positionner ledit générateur selon un axe parallèle aux axes desdits éléments de liaison filetés,
- chaque cellule de réception est montée sur ledit appareil par l'intermédiaire d'une platine support selon un axe parallèle aux axes des taraudages dudit appareil, ledit axe étant l'axe de référence pour le positionnement dudit organe support des éléments de liaison filetés,
- ladite platine support comprend deux alésages distants l'un de l'autre d'un espace correspondant à l'écartement de deux taraudages contigus, chaque alésage étant muni d'un moyen de centrage sur ledit taraudage correspondant,
- chaque alésage de ladite platine support est ouvert radialement pour encerclé partiellement ledit taraudage correspondant,
- chaque galet est monté sur un axe parallèle à la surface de contact de ladite rampe de guidage correspondante,
- les moyens de correction de l'horizontalité de L'organe support des éléments de Liaison filetés comprennent des vérins d'isonivelage interposés entre les moyens de manutention et Ledit organe support.

L'invention sera mieux comprise a l'aide de La description qui va suivre, donnée uniquement à titre d'exemple et faite en se référant aux dessins annexés, sur lesquels :
- la Fig. 1 est une vue schématique en plan du dispositif de positionnement selon l'invention disposé au-dessus du couvercle d'une cuve d'un réacteur nucléaire,
- la Fig. 2 est une vue de dessus de la Fig. 1,
- la Fig. 3 est une vue partielle en coupe et à plus grande échelle du dispositif de positionnement selon l'invention,
- la Fig. 4 est une vue en coupe d'un générateur laser et de sa cellule de réception correspondante,
- la Fig. 5 est une vue en coupe selon la ligne 5-5 de la Fig. 3,
- la Fig. 6 est une vue en coupe selon la ligne 6-6 de la Fig. 3,
- la Fig. 7 est une vue identique à la Fig. 3 montrant le positionnement d'un élément de liaison fileté dans son taraudage correspondant.

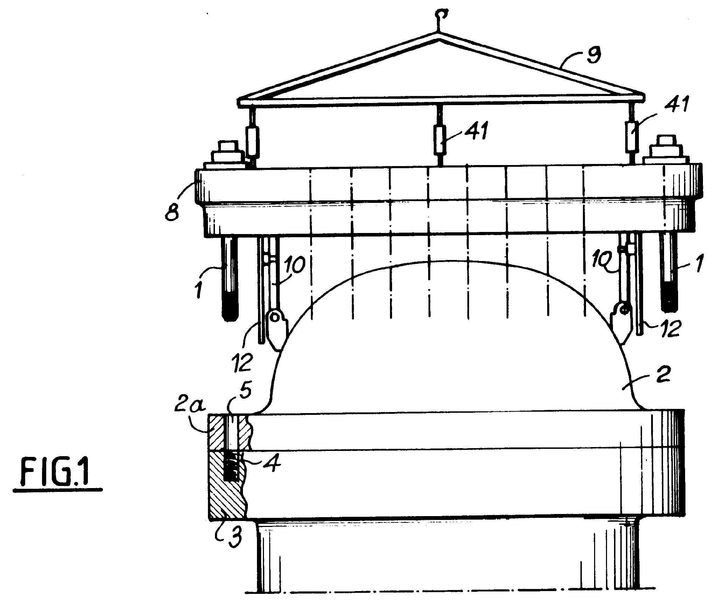

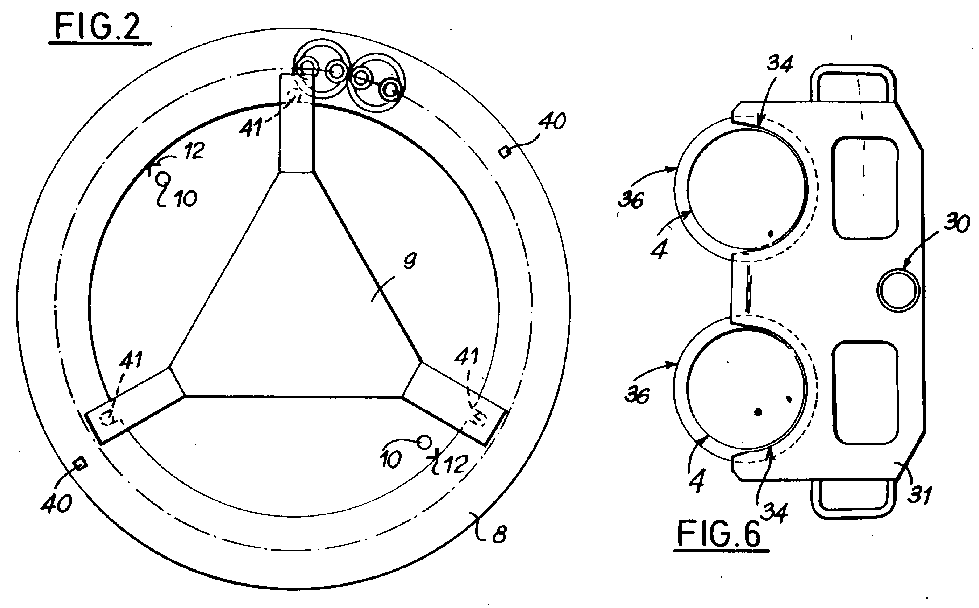

Le dispositif conforme a l'invention tel qu'il est représenté aux Figs 1 et 2 est utilisé pour le positionnement simultané de plusieurs éléments de liaison filetés 1, constitués par exemple par des goujons et destinés à la fixation d'un couvercle 2 sur une cuve 3 par exemple d'un réacteur nucléaire.

A cet effet, la cuve 3 comporte, en partie haute, un ensemble de taraudages 4 répartis symétriquement sur une circonférence concentrique par rapport à l'axe principal de ladite cuve et destinés à recevoir chacun l'extrémité filetée d'un élément de liaison 1.

D'autre part, le couvercle 2 est pourvu d'une bride périphérique 2a perçée d'alésages débouchants 5 correspondant aux taraudages 4 de la cuve 3 et répartis symétriquement sur une circonférence concentrique par rapport à l'axe principal dudit couvercle. Chaque alésage débouchant 5 est destiné au passage d'un élément de liaison fileté 1.

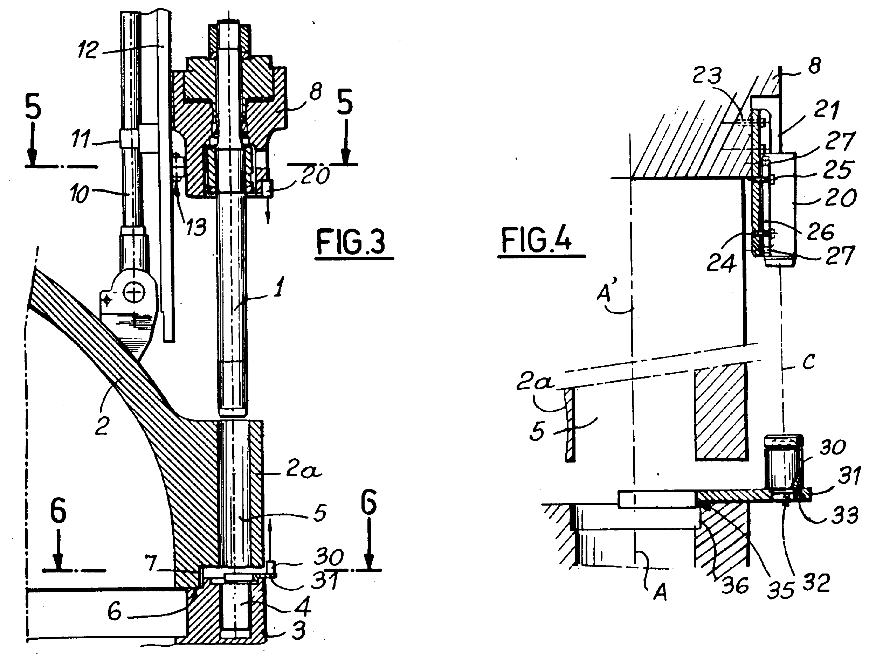

Comme cela est représenté sur la Fig. 3 la périphérie intérieure de la cuve 3 comporte un lamage axial 6 et reçoit par emboîtement un centrage 7 prévu sur la bride 2a du couvercle 2.

L'ensemble des éléments de liaison filetés 1 correspondant au nombre d'alésages débouchants 5 et de taraudages 4 est porté par un organe support 8 qui, dans le cas présent, est constitué par un anneau rigide sur lequel lesdits éléments de liaison 1 sont uniformément répartis en symétrie polaire (Fig. 2).

Cet organe support 8 muni de l'ensemble des éléments de liaison filetés 1, est supporté par des moyens de manutention 9 constitués par exemple par un palonnier, de sorte à pouvoir l'amener en surplomb de la bride 2a du couvercle 2 en place sur la cuve 3.

Le dispositif selon l'invention comporte, d'une part, des moyens de contrôle permanent et de correction de la position des axes des éléments de liaison filetés 1 par rapport aux axes des taraudages 4 correspondants et, d'autre part, des moyens de contrôle permanent et de correction de l'horizontalité de l'organe support 8.

Pour cela, le couvercle 2 est surmonté de deux colonnes verticales 10 diamétralement opposées et sur lesquelles prennent place des colliers de fixation 11 (Fig. 3), bloqués en position à l'aide de moyens de fixaiton classiques, non représentés.

Sur les colliers de fixation 11 de chaque colonne 10 est montée une rampe de guidage 12 en forme de "V" assurant le guidage vertical de l'organe support 8.

Le dispositif comporte donc deux rampes de guidage 12 diamétralement opposées qui coopèrent chacune avec des moyens de correction de la position des axes des éléments de liaison filetés 1 par rapport aux axes des taraudages 4 de la cuve 3.

Ces moyens sont constitués par des vérins hydrauliques à double effet 13 regroupés de façon à former, au minimum deux couples de vérins diamétralement opposés (Fig. 2).

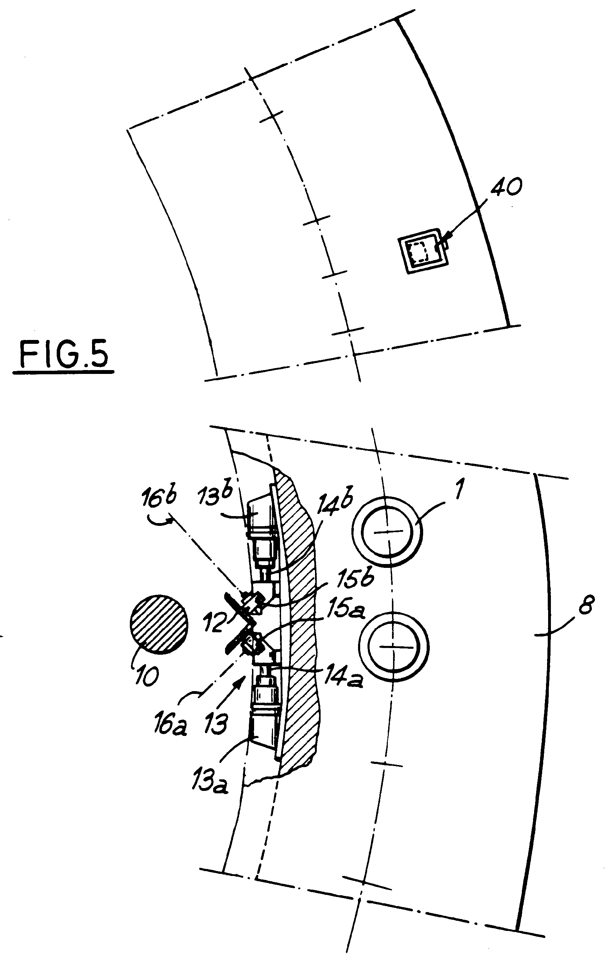

Chaque couple de vérins 13 est formé de deux vérins, respectivement 13a, 13b (Fig. 5) opposés, situés en périphérie intérieure de l'organe support 8, et fixés dans une position horizontale.

Chaque vérin 13a et 13b comporte une tige de sortie 14a et 14b dont l'extrémité libre est pourvue d'un galet 15a et 15b qui coopère avec la surface de contact correspondante de la rampe de guidage 12.

Chaque galet 15a et 15b est monté sur un axe, respectivement 16a et 16b, parallèle à la surface de contact correspondante de ladite rampe de guidage 12.

En se reportant maintenant aux Figs. 3 et 4, on va décrire les moyens de contrôle permanent de la position des axes des éléments de liaison filetés 1 par rapport aux axes des taraudages 4 correspondants.

Ces moyens utilisent au moins deux faisceaux laser.

A cet effet, l'organe support 8 comporte deux générateurs laser 20 diamétralement opposés qui sont destinés à coopérer chacun avec une cellule de réception 30 montée sur la cuve 3.

Chaque générateur laser 20 est situé en périphérie extérieure de l'organe support 8 dans lequel est ménagé un évidement 21 servant à loger une platine de réglage 22 fixée par exemple à l'aide des vis 23.

La platine de réglage 22 comporte des trous taraudés 24 dans lesquels sont vissés des vis de fixation 25 bloquant une semelle 26 du générateur laser 20.

Des vis de pression 27 permettent de régler la position dudit générateur laser 20 selon un axe vertical parallèle aux axes des éléments de liaison filetés 1.

Chaque cellule de réception 30 est portée par une platine support 31 qui comporte, à cet effet, un alésage 32 d'axe C dans lequel est fixée ladite cellule par l'intermédiaire de vis 33 (Fig. 4). Cette cellule de réception 30 est donc positionnée selon l'axe C de l'alésage 32.

La platine support 31 comprend deux alésages 34 distants l'un de l'autre d'un espace correspondant a l'écartement de deux taraudages 4 contigus, c'est à dire de deux éléments de liaison filetés 1.

Chaque alésage 34 d'axe A' (Fig. 4) est ouvert radialement ce qui permet un encerclement partiel du taraudage 4 correspondant et par conséquent de l'élément de liaison fileté 1 correspondant, lorsque celui-ci est vissé dans ledit taraudage.

D'autre part, chaque alésage 34 est muni, en saillie sur la face inférieure de la platine support 31, d'un centrage 35 concentrique et ouvert de la même façon que ledit alésage.

Ce centrage 35 est mis en place dans un lamage 36 ménagé à la partie supérieure des taraudages 4 correspondants. Chaque lamage 36 est défini par un axe A qui est également celui du taraudage 4 correspondant et qui est positionné sur une circonférence concentrique à l'axe principal de la cuve 3.

Grâce à cette disposition, on obtient une superposition parfaite des axes A et A' et l'axe C de la cellule de réception 30 est donc parallèle aux axes des taraudages 4 de la cuve 3.

De ce fait, l'axe C de ladite cellule de réception 30 devient la référence par rapport a laquelle l'organe support des éléments de liaison filetés 1 est positionné.

Par ailleurs, le dispositif selon l'invention comporte des moyens de contrôle permanent et de correction de l'horizontalité de l'organe support 8 des éléments de liaison filetés 1.

Ces moyens sont constitués par au moins deux inclinomètres 40 (Figs. 2 et 5) prévus sur l'organe support 8 et qui assurent, en phase dynamique un contrôle permanent de la position dudit organe support qui doit être rigoureusement horizontale.

Pour garantir cette position, des vérins d'isonivelage 41 (Figs. 1 et 2) sont prévus entre chaque point d'accrochage de l'organe support 8 avec les moyens de manutention 9 dudit organe support.

L'ensemble du dispositif est géré par un automate programmable non représenté.

Le dispositif fonctionne de la manière suivante.

Tout d'abord, le couvercle 2 est centré sur la cuve 3, puis l'organe support 8 muni de l'ensemble des éléments de liaison filetés 1 est amené au dessus dudit couvercle par l'intermédiaire des moyens de manutention 9.

Lorsque l'extrémité inférieure des éléments de liaison filetés 1 est à quelques centimètres au-dessus du couvercle 2 de la cuve 3, le système est enclenché. Les inclinomètres 40 vérifient en permanence l'horizontalité de l'organe support 8 et l'automate programmable commande, en fonction des informations transmises par lesdits inclinomètres les vérins d'isonivelage 41 de façon à maintenir ledit organe support 8 dans une position horizontale rigoureuse.

Simultanément, l'automate programmable commande, d'une part, la mise en contact des galets 15a et 15b des vérins 13a et 13b de chaque couple de vérins 13 avec les rampes de guidage 12 correspondantes et, d'autre part, l'allumage des générateurs laser 20 dont les faisceaux viennent éclairer les cibles constituées par les cellules de réception 30.

Cet automate programmable analyse les signaux émis par les cellules de réception 30 et commande les vérins 13a et 13b en fonction des signaux reçus pour effectuer des éventuelles corrections de façon à amener les axes des générateurs laser 20 en concordance avec les axes des cellules de reception 30 correspondantes et à aligner les éléments de liaison filetés 1 avec les taraudages 4 correspondants.

Cette recherche de la position optimum est effectuée en permanence jusqu'à ce que les éléments de liaison filetés 1 traversent les alésages débouchants 5 de la bride 2a du couvercle 2.

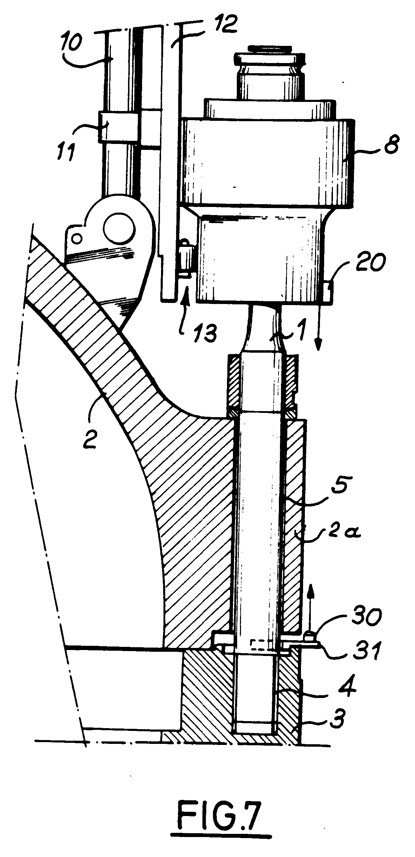

Ensuite, les éléments de liaison filetés sont vissés dans les taraudages 4 (Fig. 7) par des moyens appropriés non représentés.

La présence du couvercle 2, en place sur la cuve 3 sert de point fixe permettant à l'organe support de venir y prendre appui de façon à venir y chercher la position idéale qui permet d'éxécuter les opérations de vissage dans les conditions optimales.

De cette façon, on fait abstraction de la position du couvercle par rapport à la cuve, tout en admettant que l'axe de chaque alésage débouchant dudit couvercle peut s'y situer dans une fourchette de tolérance.

Le dispositif selon la présente invention permet donc de positionner simultanément, avec précision, plusieurs éléments de liaison filetés par rapport à des taraudages prévus sur un appareil et destinés à recevoir lesdits éléments pour la fixation d'une pièce sur cet appareil.

Le dispositif suivant l'invention s'applique non seulement aux centrales nucléaires, mais à d'autres secteurs de l'industrie nucléaire, aux installations pétrolières et prétrochimiques, aux installations minières, ou encore pour la fermeture de turbines, vannes hydrauliques, conduites sous pression ou corps de vannes. De façon générale, le dispositif suivant l'invention s'applique dans le cadre de nombreuses installations industrielles mettant en oeuvre des éléments de vissage.

## Revendications

1. Dispositif de positionnement simultané de plusieurs éléments de liaison filetés (1) portés par un organe support (8) et destinés à la fixation d'une pièce (2) placée sur un appareil (3), ladite pièce portant des alésages débouchants (5) pour le passage des éléments de liaison filetés (1) et ledit appareil comportant des taraudages (4) correspondants auxdits alésages débouchants (5) et susceptibles de recevoir lesdits éléments de liaison filetés (1), caractérisé en ce qu'il comprend
- des moyens de contrôle permanent et de correction de la position des axes des éléments de liaison filetés (1) par rapport aux axes des taraudages (4) correspondants comprenant d'une part,au moins deux générateurs laser (20) montés sur ledit organe support (8) et destinés à coopérer chacun avec une cellule de réception (30) montée sur ledit appareil (3) et, d'autre part, au moins un couple de vérins (13a, 13b) opposés, fixés sur ledit organe support (8) dans une position horizontale et dont chaque tige (14a, 14b) est munie, à son extrémité libre, d'au moins un galet (15a, 15b) coopérant avec une rampe de guidage (12) dudit organe support (8), montée sur la pièce (2) destinée à être fixée sur ledit appareil (3),
- des moyens de contrôle permanent et de correction de l'horizontalité dudit organe support (8) comprenant au moins deux inclinomètres (40) montés sur ledit organe support (8).
- et des moyens de manutention (9) dudit organe support (8).

2. Dispositif selon la revendication 1, caractérisé en ce que chaque générateur laser (20) est monté sur ledit organe support (8) par l'intermédiaire d'une platine de réglage (22, 27) permettant de positionner ledit générateur laser selon un axe parallèle aux axes des éléments de liaison filetés (1).

3. Dispositif selon la revendication 1, caractérisé en ce que chaque cellule de réception (30) est montée sur ledit appareil (3) par l'intermédiaire d'une platine support (31) selon un axe parallèle aux axes des taraudages (4) dudit appareil (3), ledit axe étant l'axe de référence pour le positionnement dudit organe support (8) des éléments de liaison filetés (1).

4. Dispositif selon la revendication 3, caractérisé en ce que ladite platine support (31) comprend deux alésages (34) distants l'un de l'autre d'un espace correspondant à l'écartement de deux taraudages (4) contigus, chaque alésage (34) étant muni d'un moyen de centrage (35) sur ledit taraudage (4) correspondant.

5. Dispositif selon La revendication 3, caractérisé en ce que chaque alésage (34) de ladite platine support (31) est ouvert radialement pour encercler partiellement ledit taraudage (4) correspondant.

6. Dispositif selon la revendication 1, caractérisé en ce que chaque galet (15a, 15b) est monté sur un axe (16a, 16b) parallèle à la surface de contact de ladite rampe de guidage (12) correspondante.

7. Dispositif selon La revendication 1, caractérisé en ce que Les moyens de correction de l'horizontalité de l'organe support (8) des éléments de liaison filetés (1) comprennent des vérins d'isonivelage (41) interposés entre les moyens de manutention (9) et ledit organe support (8).

## Patentansprüche

1. Vorrichtung zum gleichzeitigen Positionieren von mehreren Schraubverbindungselementen (1), die sich auf einem Träger (8) befinden und zur Befestigung eines Elements (2) bestimmt sind, das auf einer Vorrichtung (3) angebracht ist, wobei das Element (2) durchgehende Bohrungen (5) zum Hindurchführen der Schraubverbindungselemente (1) aufweist und die Vorrichtung (3) Innengewinde (4) aufweist, die den durchgehenden Bohrungen (5) entsprechen und zur Aufnahme der genannten Schraubverbindungselement (1) fähig sind, **dadurch gekennzeichnet,** daß sie umfaßt:
- Mittel für die ständige Kontrolle und Korrektur der Position der Achsen der Schraubverbindungselemente (1) im Verhältnis zu den Achsen der korrespondierenden Innengewinde (4), welche zum einen mindestens zwei Lasergeneratoren (20), die auf dem Träger (8) montiert sind und jeweils zum Kooperieren mit einer Empfängerzelle (30), die auf der Vorrichtung (3) montiert ist, bestimmt sind umfaßt, und zum anderen mindestens ein Paar gegenüberliegender Stellglieder (13a, 13b) die auf dem Träger (8) in horizontaler Position montiert sind und jeweils deren Hubstangen (14a, 14b) an ihrem freien Ende mit mindestens einem Rollkörper (15a, 15b) ausgerüstet sind, der mit einer geneigten Führungsebene (12) des Trägers (8) zusammenwirkt, welche auf dem Element (2) montiert ist und für die Befestigung auf der Vorrichtung (3) bestimmt ist,
- Mittel für die ständige Kontrolle und Korrektur der Horizontalität des Trägers (8), welche mindestens zwei Querneigungsmesser (40), die auf dem Träger (8) montiert sind, umfassen und
- Mittel für die Handhabung (9) des Trägers (8).

2. Vorrichtung gemäß Anspruch 1, **dadurch gekennzeichnet,** daß jeder Lasergenerator (20) auf dem Träger (8) mittels einer Einstellplatte (22, 27) montiert ist, die eine Positionierung des Lasergenerators parallel zu den Achsen der Schraubverbindungselemente (1) ermöglicht.

3. Vorrichtung gemäß Anspruch 1, **dadurch gekennzeichnet,** daß jede Empfängerzelle (30) auf der Vorrichtung mittels einer Trägerplatte (31) gemäß einer Achse, die parallel zu den Achsen der Innengewinde (4) der Vorrichtung (3) montiert ist, wobei die Achse Bezugsachse für die Positionierung des Trägers (8) der Schraubverbindungselemente (1) ist.

4. Vorrichtung gemäß Anspruch 3, **dadurch gekenzeichnet,** daß die Trägerplatte (31) zwei Bohrungen (34) umfaßt, deren Abstand voneinander dem Abstand zweier benachbarter Innengewinde (4) entspricht, wobei jede Bohrung (34) mit einem Zentrierungsmittel (35) auf das korrespondierende Innengewinde (4) versehen ist.

5. Vorrichtung gemäß Anspruch 3, **dadurch gekennzeichnet,** daß jede Bohrung (34) der Trägerplatte (31) radial geöffnet ist, um das korespondierende Innengewinde (4) teilweise zu umschließen.

6. Vorrichtung gemäß Anspruch 1, **dadurch gekennzeichnet,** daß jeder Rollkörper (15a, 15b) auf einer Achse (16a, 16b) montiert ist, die parallel zur Kontaktoberfläche der korrespondierenden geneigten Führungsebene verläuft.

7. Vorrichtung gemäß Anspruch 1, **dadurch gezennzeichnet,** daß die Mittel zur Korrektur der Horizontalität des Trägers (8) der Schrauberverbindungselemente (1) Stellglieder zur Isonivellierung umfassen, die zwischen den Mitteln (9) für die Handhabung und dem Träger (8) montiert sind.

## Claims

1. Device for simultaneously positioning a plurality of threaded connecting elements (1) carried by a support member (8) and intended for fixing a component (2) placed on an appliance (3), the said component having open-ended bores (5) for the passage of the threaded connecting elements (1), and the said appliance having tapped holes (4) corresponding to the said open-ended bores (5) and capable of receiving the said threaded connecting elements (1), characterized in that it comprises
- means for permanently checking and correcting the position of the axes of the threaded connecting elements (1) in relation to the axes or the corresponding tapped holes (4), comprising, on the one hand, at least two laser generators (20) mounted on said support member (8) and each intended to interact with a receiver cell (30) mounted on said appliance (3) and on the other hand at least one pair of mutually opposed jacks (13a, 13b) which are fixed to said support member (8) in a horizontal position and each rod (14a, 14b) of which is equipped, at its free end, with at least one roller (15a, 15b) interacting with a guide ramp (12) belonging to said support member (8) and mounted on the component ( 2) intended to be fixed to said appliance (3),
- means for permanently checking and correcting the horizontality of said support member (8), comprising at least two inclinometers (40) mounted on said support member (8),
- and means (9) for handling said support member (8).

2. Device according to claim 1, characterized in that each laser generator (20) is mounted on said support member (8) by means of an adjustment plate (22, 27) making it possible to position said laser generator along an axis parallel to the axes of the threaded connecting elements (1).

3. Device according to claim 1, characterized in that each receiver cell (30) is mounted on said appliance (3) by means of a support plate (31) along an axis parallel to the axes of the tapped holes (4) of the said appliance (3), the said axis being the reference axis for positioning said support member (8) for the threaded connecting elements (1).

4. Device according to claim 3, characterized in that said support plate (31) comprises two bores (34) spaced apart at distance corresponding to the spacing of two mutually adjacent tapped holes (4), each bore (34) being provided with means (35) for centring on said corresponding tapped hole (4).

5. Device according to claim 3, characterized in that each bore (34) of said support plate (31) is radially open in order partially to encircle said corresponding tapped hole (4).

6. Device according to claim 1, characterized in that each roller (15a, 15b) is mounted on a spindle (16a, 16b) parallel to the contact surface of said corresponding guide ramp (12).

7. Device according to claim 1, characterized in that the means for correcting the horizontality of the support member (8) for the threaded connecting elements (1) comprise isolevelling jacks (41) interposed between the handling means (9) and the said support member (8).
